# EUROPEAN PATENT SPECIFICATION

(11) **EP 4 109 260 B1**
(45) Date of publication and mention of the grant of the patent: **25.11.2026**
(21) Application number: 22174681.1
(22) Date of filing: 20.05.2022
(51) Int. Cl.: G06F 9/50

(54) **PRESCRIPTIVE ANALYTICS-BASED PERFORMANCE-CENTRIC DYNAMIC SERVERLESS SIZING**
AUF PRÄSKRIPTIVER ANALYTIK BASIERENDE LEISTUNGSZENTRIERTE DYNAMISCHE SERVERLOSE DIMENSIONIERUNG
DIMENSIONNEMENT DYNAMIQUE SANS SERVEUR AXÉ SUR LA PERFORMANCE BASÉ SUR DES ANALYSES PRESCRIPTIVES

(30) Priority: 22.06.2021 US 202117354542
(43) Date of publication of application: 28.12.2022
(73) Proprietor: Accenture Global Solutions Limited, Dublin 4 (IE)
(72) Inventor: SRINIVASAN, Madhan Kumar, 570018 Mysuru (IN); SIVACHARI RAGE, Samba, 560100 Bengaluru (IN); KUMAR GAJULA, Kishore, 500089 Hyderabad (IN)
(74) Representative: Müller-Boré & Partner Patentanwälte PartG mbB

(56) References cited:
- EP-A1- 3 508 976
- EP-A1- 3 667 485
- EP-A2- 3 702 898
- US-A1- 2010 269 109
- US-A1- 2018 060 744
- US-A1- 2019 205 150

## Description

### Technical Field

This disclosure relates to prescriptive analytics-based serverless sizing.

### Background

Rapid advances in communications and storage technologies, driven by immense customer demand, have resulted in widespread adoption of cloud systems for managing large data payloads, distributed computing, and record systems. As one example, modern enterprise systems presently maintain data records many petabytes in size in the cloud. Improvements in tools for cloud resource allocation and consumption prediction will further enhance the capabilities of cloud computing systems.
US 2019/205150 A1 and EP 3508976 A1 both describe that a multi-layer compute sizing correction stack may generate prescriptive compute sizing correction tokens for controlling sizing adjustments for computing resources.
EP3702898 A2 describes that a multi-layer rate sizing stack may generate prescriptive operation-rate tokens for controlling sizing adjustments for operation-rates.
EP3667485A1 describes that multi-layer storage class placement stack may generate a token containing storage class placement prescriptions for controlling the placement of stored items within a selection of classes for storage.

### Brief Description of the Drawings

Figure 1 shows an example serverless sizing stack.
Figure 2 shows example serverless sizing stack logic.
Figure 3 shows an example specific execution environment for the example serverless sizing stack.
Figure 4 shows a first example sizing-command interface.
Figure 5 shows a second example sizing-command interface.

### Detailed Description

In cloud computing systems, compute resources such as serverless functions, memory, or other compute resources may be requisitioned for operation. In some cases, a computing resource may itself constitute an over-provisioning or under provisioning. For example, a serverless function may be initiated with more memory or other compute resources than may be used by the serverless function during execution. In an example, a serverless function may be initiated with less memory or other compute resources than used in the execution of the function leading to low performance, timeouts, and/or other execution issues. Further, the under provisioned serverless function may take longer to execute than a more accurately provisioned serverless function. The consumption of resources to accommodate the extended execution may consume more resources than that saved through the more minimal provisioning. In another illustration, the serverless function, in some cases, may reject or be non-responsive to over-capacity requests. Accordingly, an over-sized or undersized compute resource may lead to performance degradation or inefficient deployment of hardware resources.

Accordingly, increased compute sizing accuracy, including serverless sizing accuracy, provides a technical solution to the technical problem of system inefficiency by increasing the utilization and efficiency of compute resources. The serverless sizing stack (SSS) techniques and architectures described below may be used to prescribe serverless function sizing recommendations based on computational-performance scores.

The SSS may analyze historical data and consumption metric data to predict future utilization and produce prescriptive recommendations. Utilization data, may include, for example, historical data related to usage or activation of serverless functions, e.g., resource allocation history, function request history data, expenditure report data for serverless compute resources, processor activity, memory usage history, computing cycles, data throughput, or other utilization metrics, seasonal usage cycles e.g., holiday schedules, daily usage cycles, weekly usage cycles, quarterly usage cycles or other data. Historical data may also include utilization data from virtual machine usage for various tasks that may be migrated to a serverless context in the future. Consumption metric data may include computing resource specific cost metrics such as expenditure-per-time or resource-per-time metrics.

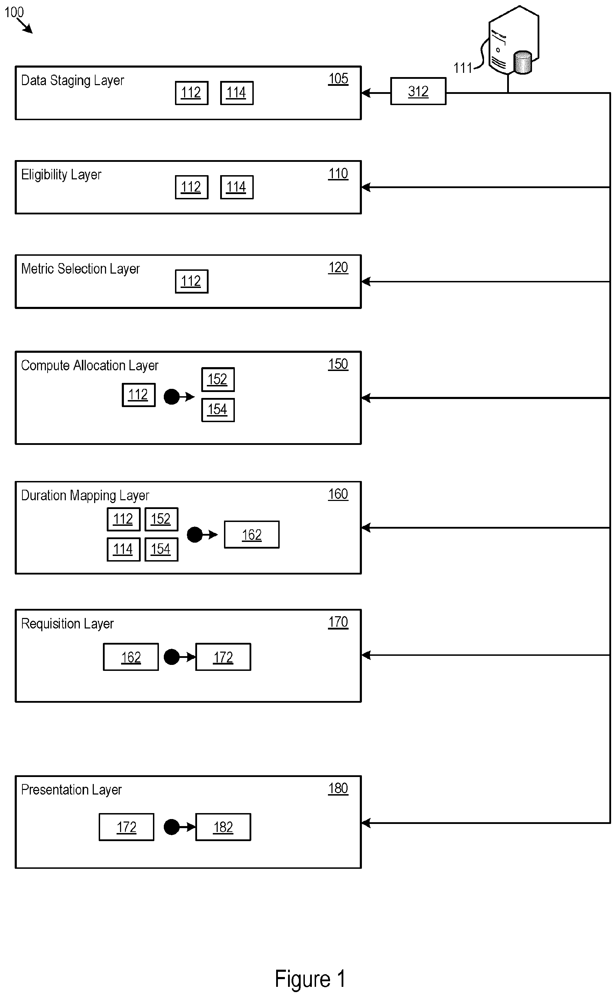

Figure 1 shows an example multiple layer SSS 100, which may execute on serverless sizing circuitry making up the hardware underpinning of the SSS 100. In this example, the SSS 100 includes a data-staging layer 105, an eligibility layer 110, a metric selection layer 120, a compute allocation layer 150, a duration mapping layer 160, a requisition layer 170, and a presentation layer 180. The SSS 100 may include a multiple-layer computing structure of hardware and/or software that may provide prescriptive analytical recommendations (e.g., directives for allocations of compute resources at the time(s) of serverless function instantiation) through data analysis.

A stack may refer to a multi-layered computer architecture that defines the interaction of software and hardware resources at the multiple layers. The Open Systems Interconnection (OSI) model is an example of a stack-type architecture. The layers of a stack may pass data and hardware resources among themselves to facilitate data processing. As one example for the SSS 100, the data-staging layer 105 may provide the eligibility layer 110 with data-storage resources to access historical data. Hence, the data-staging layer 105 may provide a hardware resource, e.g., memory storage resources, to the eligibility layer 110. Accordingly, the multiple-layer stack architecture of the SSS may improve the functioning of the underlying hardware.

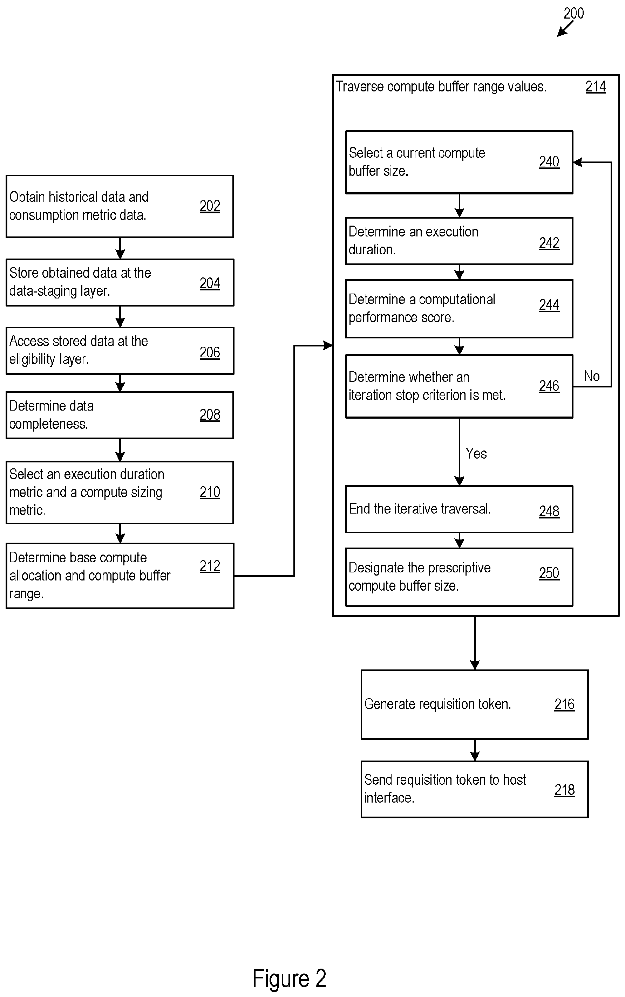

In the following, reference is made to Figure 1 and the corresponding example serverless sizing stack logic (SSSL) 200 in Figure 2. The logical features of SSSL 200 may be implemented in various orders and combinations. For example, in a first implementation, one or more features may be omitted or reordered with respect to a second implementation.

At the data-staging layer 105 of the SSS 100, the SSSL 200 may obtain historical data 112 and/or consumption metric data 114 (202) and then store the obtained data (204). In some cases, the historical data 112 and/or consumption metric data 114 may be received via communication interfaces (e.g., communication interfaces 312, discussed below). The historical data 112 and/or consumption metric data 114 may be accessed at least in part, e.g., via the communication interfaces 312, from data sources 111, which may include, cloud compute utilization databases, serverless host interfaces, cloud expenditure databases, master serverless cost databases, serverless family/template description data, infrastructure/project tags or other data sources.

After the historical data 112 and/or consumption metric data 114 are obtained and stored, the eligibility layer 110 may access the some or all of the stored data (206) using memory resources passed from the data-staging layer 105 (e.g., memory access resources). The eligibility layer 110 may process the historical data 112 to determine data completeness for a serverless function represented within the historical data (208). For example, the eligibility layer 110 may determine whether the historical data includes data relevant to the serverless function being investigated. In some implementations, a threshold length of data history may be used. For example, eligibility may be granted from serverless functions with more than a predetermined period of historical data (30 day, 90 days, 12 months, multiple years, or other predetermined duration). Relevance of historical data may be determined based on tagging data, serverless function class, ownership, or other indications of relevance. When data completeness is confirmed, the eligibility layer 110 may mark a serverless function as sizing eligible.

At the metric selection layer 120, the SSSL 200 may select an execution duration metric and a compute sizing metric for iterative comparison (210). For example, the metric selection layer 120 may determine the metrics over which to analyze a serverless function. For example, the metrics may include compute resource type, such as memory size or other compute resource type. The metrics may include other factors such as execution duration, request response lag time, non-response ratios, or other metrics.

After selection of the metrics, the SSSL 200 may perform an analysis to determine a base compute size 152 and a compute buffer range 154 (212). The base compute size may include a "base" compute allocation to which a compute buffer may be added. Accordingly, the iterative evaluation process may traverse the compute buffer range varying the compute buffer size while the base compute allocation stays static during the iterative analysis.

In various implementations, the base compute allocation may be determined based on a predicted compute usage by the SSSL 200 at the compute allocation layer. In some cases, the base compute allocation may be selected to be a predetermined percentile (e.g., 95^{th} percentile, 99^{th} percentile, or other pre-determined percentile) of the predicted compute usage for the prediction period. For example, for a memory-type compute resource, the base compute allocation may include a base memory allocation.

The computer buffer range may be selected based on a predetermined percentile (e.g., 95^{th} percentile, 100^{th} percentile (e.g., max usage), or other pre-determined percentile) of the predicted compute usage for the prediction period. For example, the minimum end of the computer buffer range may be selected such that the base compute allocation plus the minimum buffer is equal to the max usage. In some cases, setting the computer buffer range minimum based on the max usage may reduce the chance of serverless duration timeouts (e.g., where the serverless function fails to complete execution prior to an end of the allowed persistence time for the serverless function. As a concrete real-world example, the serverless function may be barred from persisting more than 15 minutes. Accordingly, a timeout may occur if the serverless function fails to complete execution in less than 15 minutes.

In some implementations, the computer buffer range may be reset with an increased minimum and the iterative process described below may be restarted when a timeout is found using the default minimum buffer size. In some cases, the minimum buffer size may be increase by a predetermined amount when a timeout is found through the iterative process. For example, the buffer may be increased 15% or other percentage, a percentage of the base + buffer total, or by another predetermined value. In some cases, the iterative process may stop the current iteration and proceed to the next value.

The compute buffer range maximum may be set to a predetermined value based on the parameters. For example, the maximum buffer may be set such that the base + buffer is equal to some multiple of the maximum predicted usage (e.g., 105%, 110%, 115%, or other multiple).

In various implementations, the SSSL 200 may perform a deep-learning analysis to predict the serverless function usage parameters. In some cases, the deep-learning analysis may include a comparison between the serverless function under test and previously executed serverless functions represented within the historical data 112. The comparison may be implemented by training a deep-learning neural network based on at least a portion of the historical data 112. The training process may adjust the interneural weights for the layers within the deep-learning neural network. Allowing the serverless function under test to be classified (and parameterized) in the context of previously executed serverless functions.

After selection of the compute buffer range and base compute allocation, the SSSL 200 may, the duration mapping layer 160, perform an iterative analysis to traverse values of the compute buffer range (214). In some cases, the iterative process may start at the compute buffer range minimum and proceed toward the maximum. In some cases, a nonlinear search may be used.

For each iteration, the process may selecting a current compute buffer size for the iteration (240). For example, the SSSL 200 may increase the buffer by a set increment from the previous iteration (e.g., 10% of buffer range, 5% of buffer range, defined fraction of buffer range, inverse of selected number of iterations, or other increment). For example, SSSL 200 may perform a differential gradient analysis (e.g., using convergence modeling) to select a dynamic increment. For example, the SSSL 200 may proceed according to a search algorithm. The process may terminate (e.g., reach iteration stop condition) when the iterative process leads to a buffer value above the buffer maximum.

Once the current compute buffer size is selected, the SSSL 200 may determine an execution duration based on the current compute buffer size and the base compute allocation (242).

In various implementations, the SSSL 200 may perform a deep-learning analysis to predict the serverless function execution duration for a given buffer/base combination. In some cases, the deep-learning analysis may include a comparison between the serverless function under test and previously executed serverless functions represented within the historical data 112. The comparison may be implemented by training a deep-learning neural network based on at least a portion of the historical data 112. The training process may adjust the interneural weights for the layers within the deep-learning neural network. Allowing the serverless function under test to be classified (and execution duration determined) in the context of previously executed serverless functions.

Once the duration for the current buffer size is determined, the SSSL 200 may determine a current computational-performance score corresponding to the buffer/base and the duration (244). In some cases, the computational-performance score may include an efficiency-type score, in which the score is assigned favoring shorter execution duration and fewer compute resources. In some cases, the computational-performance score may be based weights determined using the consumption metric data 114. Accordingly, the iterative process may search for the computer buffer size that balances execution duration with compute resource allocation to reduce consumption metrics (e.g., achieve efficiency).

The SSSL 200 may determine whether the computational-performance score and/or current buffer size meeting an iteration stop criterion (246). Iteration stop criteria may include location of a buffer size with a comparatively better computational-performance score to other buffer sizes in the compute buffer size range. For example, when a local extremum (e.g., minimum or maximum depending on computational-performance score type) is reached the iteration stop criterion may be met. In some cases, an iteration stop criterion may be met when the current buffer size is equal (or greater than) the maximum of the compute buffer range. In some cases, the iteration stop criterion may be met when the duration determination indicates that the current buffer size would result in an execution timeout for the serverless function. In some cases, in response to a timeout, the compute buffer range may be reevaluated the iterative analysis may restart with a new compute buffer range with new maximums and/or minimums. In some cases, an execution timeout may not be an iteration stop criterion and the iterative process may continue with a next highest increment or a next step with a buffer size that is larger than the buffer size that produced the timeout.

When the iteration stop criterion is met as a result of an extremum performance score and/or a maximum buffer size being reached, the SSSL 200 may end the iterative traversal (248) and designate that the buffer size meeting the iteration stop criterion as the prescriptive compute buffer size 162 (250).

As an illustrative example, the analysis may be performed for a memory-type compute resource and an iterative process using a set increment. Table 1 shows an example pseudocode routine to implement such an iterative process.

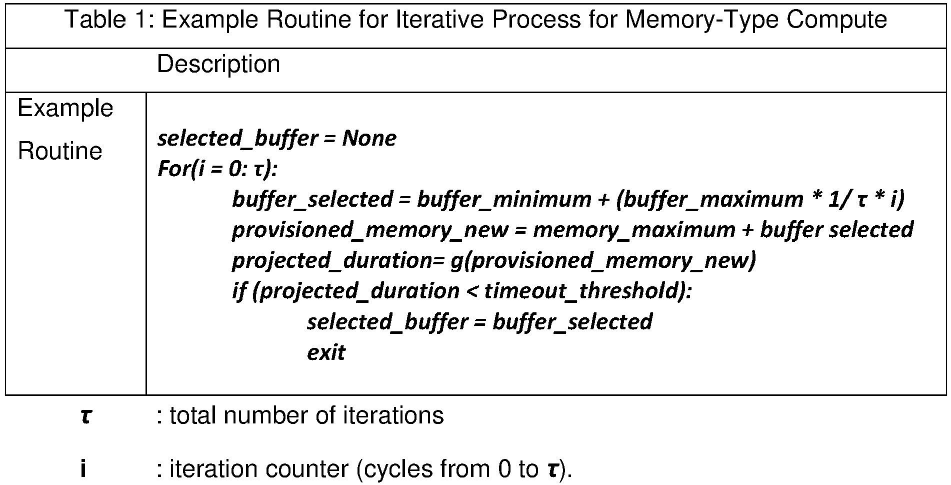

In various implementations, after a prescriptive compute buffer size is found by the iterative process, the SSSL 200 may, at the requisition layer 170 generate a requisition token 172 based on the prescriptive compute buffer size and base compute buffer size (216). The requisition token 172 may be used to control allocations for instances of the serverless function. The requisition token 172 may be sent to a host interface for control of serverless compute resources via the network interface circuitry (218) (e.g., interfaces 312, discussed below).

In various implementations, the SSSL 200 may further base the requisition token 172 on one or more finalization directives (e.g., interface command from operators and/or machine-learning based adjustments). A finalization directive may, for example, include feedback-based machine-learning-trained (e.g., using various machine-learning schemes, deep-learning, neural networks, and/or other machine-learning schemes) adjustments to the prescriptive compute buffer size and/or base compute allocation. The feedback (on which to base the machine-learning training) may include operator commands.

At the presentation layer 180, the SSSL 200 may generate a sizing-command interface 182, which may receive operator commands and present prescriptive compute buffers sizes/allocations for review by operators. The received operator commands may change and/or confirm the selection of the prescriptive compute allocations and/or adjust other settings options.

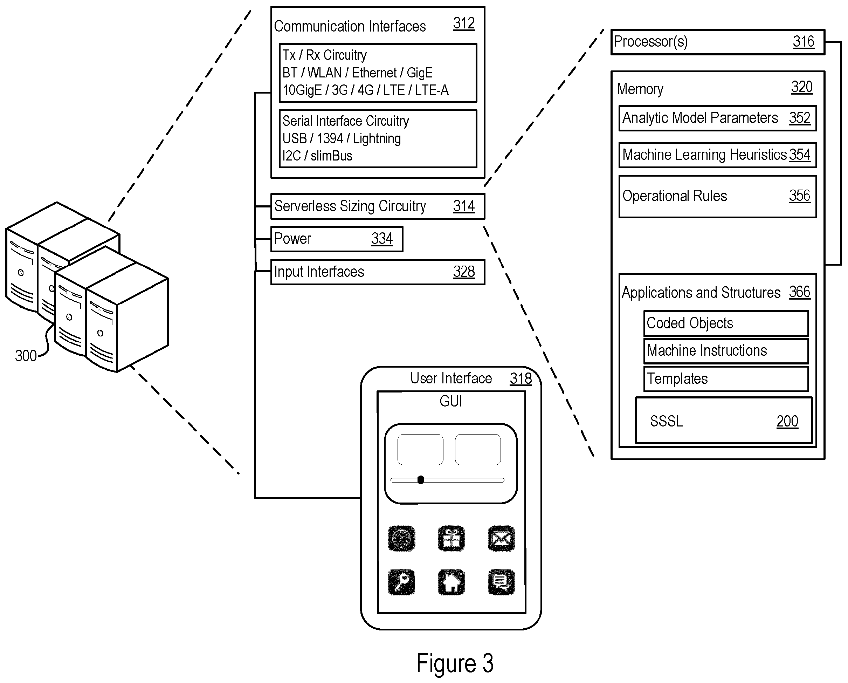

Figure 3 shows an example specific execution environment 300 for the SSS 100 described above. The execution environment 300 may include serverless sizing circuitry 314 to support execution of the multiple layers of SSS 100 described above. The serverless sizing circuitry 314 may include processors 316, memory 320, and/or other circuitry.

The memory 320 may include analytic model parameters 352, machine learning heuristics 354, and operational rules 356. The memory 320 may further include applications and structures 366, for example, coded objects, machine instructions, templates, or other structures to support historical data analysis, tolerance accommodation, strata selection or other tasks described above. The applications and structures may implement the SSSL 200.

The execution environment 300 may also include communication interfaces 312, which may support wireless, e.g. Bluetooth, Wi-Fi, WLAN, cellular (4G, LTE/A), and/or wired, Ethernet, Gigabit Ethernet, optical networking protocols. The communication interfaces 312 may also include serial interfaces, such as universal serial bus (USB), serial ATA, IEEE 1394, lighting port, I²C, slimBus, or other serial interfaces. The communication interfaces 312 may be used to support and/or implement remote operation of the sizing-command interface 182. The execution environment 300 may include power functions 334 and various input interfaces 328. The execution environment may also include a user interface 318 that may include human-to-machine interface devices and/or graphical user interfaces (GUI). The user interface 318 may be used to support and/or implement local operation of the sizing-command interface 182. In various implementations, the serverless sizing circuitry 314 may be distributed over one or more physical servers, be implemented as one or more virtual machines, be implemented in container environments such as Cloud Foundry or Docker, and/or be implemented in Serverless (functions as-a-Service) environments.

In some cases, the execution environment 300 may be a specially-defined computational system deployed in a cloud platform. In some cases, the parameters defining the execution environment may be specified in a manifest for cloud deployment. The manifest may be used by an operator to requisition cloud based hardware resources, and then deploy the software components, for example, the SSS 100, of the execution environment onto the hardware resources. In some cases, a manifest may be stored as a preference file such as a YAML (yet another mark-up language), JSON, or other preference file type.

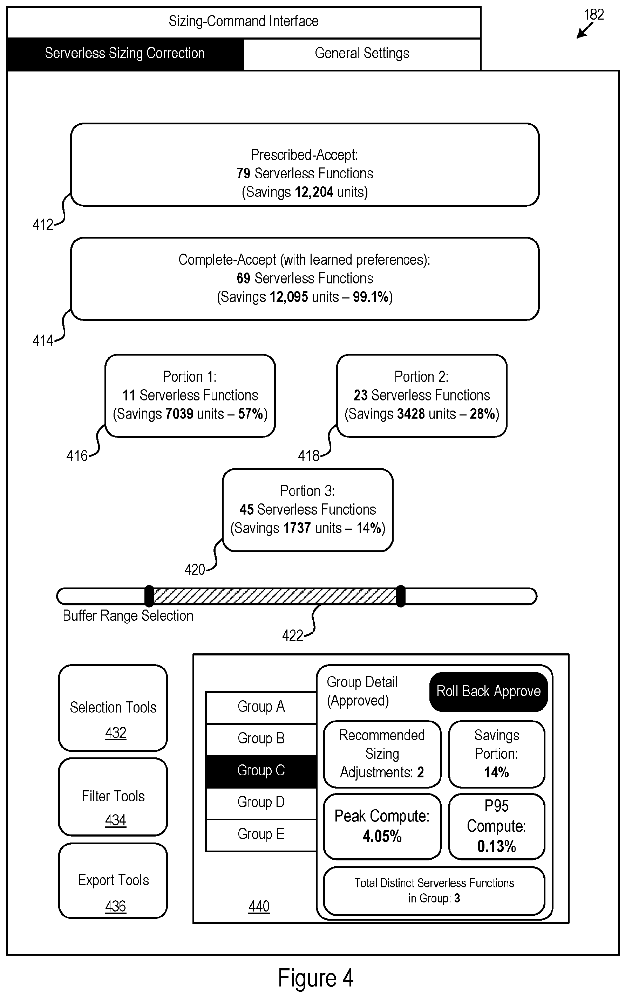

Referring now to Figure 4, a first example sizing-command interface 182 is shown. The sizing-command interface 182 may include multiple selectable options 412, 414, 416, 418, 420, 422 and data regarding the prescriptive compute buffer size and/or base compute allocation adjustments before and after alteration to accommodate the learned preferences of the operator. The sizing-command interface 182 may also include input parameters for the iterative analysis, such as an option 422 for selecting the computer buffer range. In this example scenario, the selectable options may include a prescribed-accept option 412 to implement some or all of the prescriptive compute buffer sizes and/or base compute allocations (e.g., for multiple parallel analyses) as a group without alteration based on learned preferences, a complete-accept option 414 to implement the prescriptive compute buffer sizes and/or base compute allocations with alterations (finalization directives) based on learned preferences, and options 416, 418, 420 to implement adjustments to selected subsets of the prescriptive compute buffer sizes and/or base compute allocations.

Additionally or alternatively, the sizing-command interface 182 may include selection and filter tools 432, 434 to support granular manipulation of the prescriptive compute buffer sizes and/or base compute allocations, e.g., by resource region, by tolerances accommodated; or other granular manipulation. The sizing-command interface 182 may include data export tools 436 for export of the presented data.

In some implementations, the sizing-command interface 182 may include a group detail panel 440 for management of group-level selectable options such as group level approvals of prescriptive compute buffer sizes and/or base compute allocations. Additionally or alternatively, the group detail panel 440 may display group-level information regarding prescriptive compute buffer sizes and/or base compute allocations of the serverless function. The group detail panel 440 may also provide an option to roll back previously approved prescriptive compute buffer sizes and/or base compute allocations.

In the example, shown in Figure 4, the options 416, 418, 420 allow for manipulation of selected subsets of the prescriptive compute buffer sizes for serverless functions. For example, as shown the example routine in table two, the tier requisition adjustments may be "binned" into consumption savings groups (e.g., groups based on consumption metric analyses indicating resource savings associated with the prescriptive compute buffer sizes). For example, "high", "medium", and "low" consumption savings bins may allow the operator to select specific groups of serverless function. The options 416, 418, 420 show the respective portions of the total consumption savings that may be achieved by adjusting each specific subset of the serverless function. In the example, the first subset option 416 provides the greatest marginal consumption savings, while the options 418, 420 provide successively smaller marginal consumption savings.

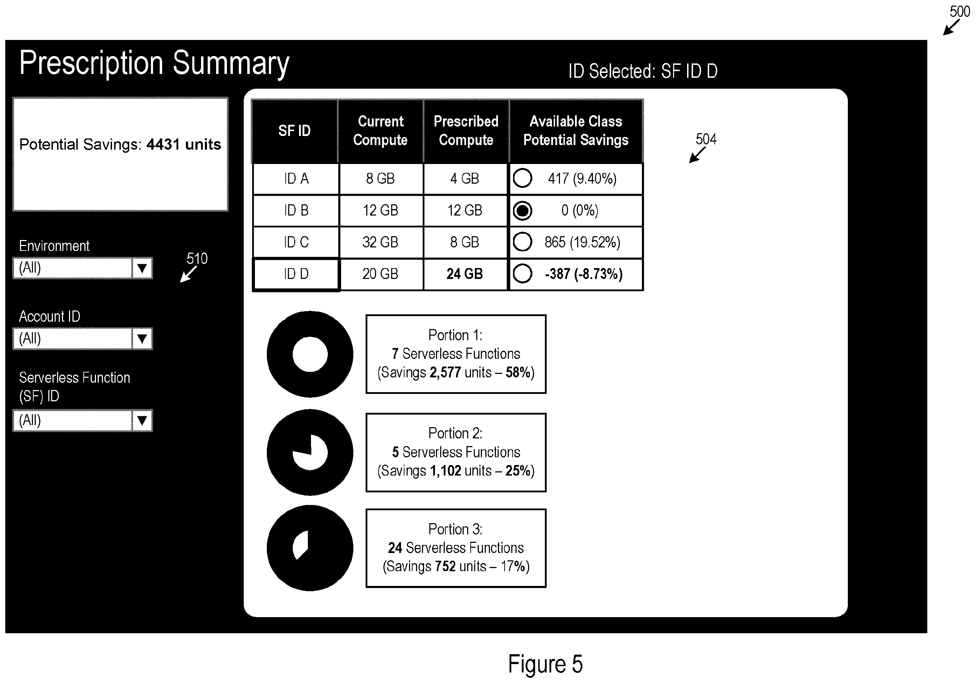

Figure 5 shows a second example sizing-command interface 500. The second example sizing-command interface 500 is serverless function identifier (e.g., a specific and/or unique designation for a given serverless function) specific. The sizing-command interface 500 provides detail panels 504 with regard to consumption savings for the selected serverless function resource (SF ID). Selections based on operator preferences may be made within the detail panels 504. The sizing-command interface 500 may further include tools 510 for filtering and selecting serverless function identifiers for detail display within the example sizing-command interface 500.

The methods, devices, processing, circuitry, and logic described above may be implemented in many different ways and in many different combinations of hardware and software. For example, all or parts of the implementations may be circuitry that includes an instruction processor, such as a Central Processing Unit (CPU), microcontroller, or a microprocessor; or as an Application Specific Integrated Circuit (ASIC), Programmable Logic Device (PLD), or Field Programmable Gate Array (FPGA); or as circuitry that includes discrete logic or other circuit components, including analog circuit components, digital circuit components or both; or any combination thereof. The circuitry may include discrete interconnected hardware components or may be combined on a single integrated circuit die, distributed among multiple integrated circuit dies, or implemented in a Multiple Chip Module (MCM) of multiple integrated circuit dies in a common package, as examples.

Accordingly, the circuitry may store or access instructions for execution, or may implement its functionality in hardware alone. The instructions may be stored in a tangible storage medium that is other than a transitory signal, such as a flash memory, a Random Access Memory (RAM), a Read Only Memory (ROM), an Erasable Programmable Read Only Memory (EPROM); or on a magnetic or optical disc, such as a Compact Disc Read Only Memory (CDROM), Hard Disk Drive (HDD), or other magnetic or optical disk; or in or on another machine-readable medium. A product, such as a computer program product, may include a storage medium and instructions stored in or on the medium, and the instructions when executed by the circuitry in a device may cause the device to implement any of the processing described above or illustrated in the drawings.

The implementations may be distributed. For instance, the circuitry may include multiple distinct system components, such as multiple processors and memories, and may span multiple distributed processing systems. Parameters, databases, and other data structures may be separately stored and managed, may be incorporated into a single memory or database, may be logically and physically organized in many different ways, and may be implemented in many different ways. Example implementations include linked lists, program variables, hash tables, arrays, records (e.g., database records), objects, and implicit storage mechanisms. Instructions may form parts (e.g., subroutines or other code sections) of a single program, may form multiple separate programs, may be distributed across multiple 12 memories and processors, and may be implemented in many different ways. Example implementations include stand-alone programs, and as part of a library, such as a shared library like a Dynamic Link Library (DLL). The library, for example, may contain shared data and one or more shared programs that include instructions that perform any of the processing described above or illustrated in the drawings, when executed by the circuitry.

Various implementations may use the techniques and architectures described above.

| Table 2: Examples |
|---|
| 1. A system including: |
| serverless sizing circuitry configured to execute a serverless sizing stack, the |
| at a duration mapping layer of the serverless sizing stack, conduct an iterative traversal of the compute buffer range by: |
| for each iteration: |
| perform the compute deep-learning analysis of the compute usage data by |

Various implementations have been specifically described. However, many other implementations are also possible.

## Claims

1. A method including: at serverless sizing circuitry (314) configured to execute a serverless sizing stack (100):
at a data-staging layer (105) of the serverless sizing stack:
obtaining historical data (112) including execution duration data and compute usage data for a serverless function;
at an eligibility layer (110) of the serverless sizing stack:
accessing the historical data via data-storage operations provided by the data-staging layer;
based on the historical data, determining data completeness for a serverless function represented within the historical data; and
when data completeness for the serverless function exceeds a pre-determined threshold, marking the serverless function as sizing-eligible;
at a metric selection layer (120) of the serverless sizing stack, selecting an execution duration metric and a compute sizing metric for iterative comparison;
at a compute allocation layer (150) of the serverless sizing stack, determining, via a compute deep-learning analysis of the compute usage data, a base compute size (152) and compute buffer range (154);
at a duration mapping layer (160) of the serverless sizing stack, conducting an iterative traversal of the compute buffer range by: for each iteration:
selecting a current compute buffer size for the iteration, the current compute buffer size being within the compute buffer range;
based on a combination of the base compute size and the current compute buffer size and using a duration deep-learning analysis of the execution duration data, determining a current compute duration for the serverless function;
based on the current compute duration, the base compute size, and the current compute buffer size, determining a current computational-performance score for the current compute buffer size, wherein determining the computational-performance score includes:
generating a score based on a product of a sum of the base compute size and the current compute buffer size multiplied by the current compute duration;
accessing consumption metric data for the sum of the base compute size and the current compute buffer size; and
generating the computational-performance score by weighting the sum based on the consumption metric data for the sum of the base compute size and the current compute buffer size,
wherein the current computational-performance score includes an efficiency-type score, in which the efficiency-type score is assigned favoring shorter execution duration and fewer compute resources;
determining whether the current computational-performance score meets an iteration stop criterion; and
when the current computational-performance score meets the iteration stop criterion:
ending the iterative traversal; and
designating the current compute buffer size as a prescriptive compute buffer size; and
at a requisition layer (170) of the serverless sizing stack, generating a serverless requisition token (172) including:
a request for the serverless function with a requested size corresponding to the prescriptive compute buffer size and base compute buffer size; and
via network interface circuitry, sending the serverless requisition token to a host interface (312) for control of serverless compute resources.

2. The method of any one of the preceding claims, where:
the iteration stop criterion includes a condition that the current compute buffer size has reached an end of the compute buffer range.

3. The method of any one of the preceding claims, where:
the iteration stop criterion includes a condition that the computational-performance score for the current compute buffer size has reached an extremum.

4. The method of claim 3, where the extremum is associated with a consumption metric minimum for one or more computational performance scores for the iterative traversal.

5. The method of any one of the preceding claims, where:
the compute usage data includes memory usage data;
the base compute size includes a base memory allocation; and
the compute buffer range includes a memory buffer range.

6. The method of any one of the preceding claims, where:
the compute allocation layer includes a neural network trained using the historical data; and
the method comprises the serverless sizing circuitry performing the compute deep-learning analysis of the compute usage data by comparing the serverless function to previous functions by applying a representation of the serverless function to an input layer of the neural network.

7. The method of any one of the preceding claims, where the method comprises the serverless sizing circuitry determining the compute buffer range by:
determining a maximum predicted compute size used by the serverless function;
and
setting a lowest end of the compute buffer range such that the lowest end and the base compute size together equal the maximum predicted compute size.

8. The method of any one of the preceding claims, where the method comprises the serverless sizing circuitry determining the base compute size by:
predicting compute size usages over the course of execution of serverless function;
and
determining a percentile compute size usage corresponding to a compute size usage at a predetermined percentile among the compute size usages; and
setting the base compute size to accommodate the percentile compute size usage.

9. The method of any one of the preceding claims, where the historical data corresponds to at least 12 months of usage data.

10. The method of any one of the preceding claims, where the serverless requisition token is generated based on a finalization directive, the finalization directive including:
an operator input command received at a serverless command-interface generated at a presentation layer of the serverless sizing stack;
a feedback-trained machine learning adjustment determined based on an operator input command history; or
both.

11. A system arranged to carry out the method of any one of claims 1 to 10.

12. A computer program which, when executed by one or more processors, causes the one or more processors to carry out the method of any one of claims 1 to 10.

## Patentansprüche

1. Verfahren, umfassend: in einer Schaltungsanordnung (314) zur serverlosen Dimensionierung, die dazu konfiguriert ist, einen Stapel (100) zur serverlosen Dimensionierung auszuführen:
in einer Datenbereitstellungsschicht (105) des Stapels zur serverlosen Dimensionierung:
Erhalten historischer Daten (112), die Ausführungsdauerdaten und Rechenressourcennutzungsdaten für eine serverlose Funktion umfassen;
in einer Eignungsschicht (110) des Stapels zur serverlosen Dimensionierung:
Zugreifen auf die historischen Daten mittels Datenspeicheroperationen, die von der Datenbereitstellungsschicht bereitgestellt werden;
Bestimmen der Datenvollständigkeit für eine innerhalb der historischen Daten repräsentierte serverlose Funktion auf Grundlage der historischen Daten; und
wenn die Datenvollständigkeit für die serverlose Funktion einen vorbestimmten Schwellenwert überschreitet, Kennzeichnen der serverlosen Funktion als dimensionierungsgeeignet;
in einer Metrikauswahlschicht (120) des Stapels zur serverlosen Dimensionierung, Auswählen einer Ausführungsdauermetrik und einer Rechenressourcen-Dimensionierungsmetrik für einen iterativen Vergleich;
in einer Rechenressourcen-Zuweisungsschicht (150) des Stapels zur serverlosen Dimensionierung, Bestimmen einer Basis-Rechenressourcengröße (152) und eines Rechenressourcen-Pufferbereichs (154) mittels einer rechenressourcenbezogenen Deep-Learning-Analyse der Rechenressourcennutzungsdaten;
in einer Dauerzuordnungsschicht (160) des Stapels zur serverlosen Dimensionierung, Durchführen eines iterativen Durchlaufens des Rechenressourcen-Pufferbereichs durch Folgendes: für jede Iteration:
Auswählen einer aktuellen Rechenressourcen-Puffergröße für die Iteration, wobei die aktuelle Rechenressourcen-Puffergröße innerhalb des Rechenressourcen-Pufferbereichs liegt;
Bestimmen einer aktuellen Rechendauer für die serverlose Funktion auf Grundlage einer Kombination der Basis-Rechenressourcengröße und der aktuellen Rechenressourcen-Puffergröße und unter Verwendung einer dauerbezogenen Deep-Learning-Analyse der Ausführungsdauerdaten;
Bestimmen eines aktuellen Rechenleistungsbewertungswerts für die aktuelle Rechenressourcen-Puffergröße auf Grundlage der aktuellen Rechendauer, der Basis-Rechenressourcengröße und der aktuellen Rechenressourcen-Puffergröße, wobei das Bestimmen des Rechenleistungsbewertungswerts umfasst:
Erzeugen eines Bewertungswerts auf Grundlage eines Produkts aus der Multiplikation einer Summe der Basis-Rechenressourcengröße und der aktuellen Rechenressourcen-Puffergröße mit der aktuellen Rechendauer;
Zugreifen auf Verbrauchsmetrikdaten für die Summe der Basis-Rechenressourcengröße und der aktuellen Rechenressourcen-Puffergröße; und
Erzeugen des Rechenleistungsbewertungswerts durch Gewichten der Summe auf Grundlage der Verbrauchsmetrikdaten für die Summe der Basis-Rechenressourcengröße und der aktuellen Rechenressourcen-Puffergröße,
wobei der aktuelle Rechenleistungsbewertungswert einen Bewertungswert vom Effizienztyp umfasst, wobei der Bewertungswert vom Effizienztyp unter Bevorzugung einer kürzeren Ausführungsdauer und weniger Rechenressourcen zugewiesen wird;
Bestimmen, ob der aktuelle Rechenleistungsbewertungswert ein Iterationsabbruchkriterium erfüllt; und
wenn der aktuelle Rechenleistungsbewertungswert das Iterationsabbruchkriterium erfüllt:
Beenden des iterativen Durchlaufens; und
Festlegen der aktuellen Rechenressourcen-Puffergröße als eine präskriptive Rechenressourcen-Puffergröße; und
in einer Anforderungsschicht (170) des Stapels zur serverlosen Dimensionierung, Erzeugen eines serverlosen Anforderungstokens (172), umfassend:
eine Anfrage für die serverlose Funktion mit einer angeforderten Größe, die der präskriptiven Rechenressourcen-Puffergröße und der Basis-Rechenressourcen-Puffergröße entspricht; und
mittels einer Netzwerkschnittstellen-Schaltungsanordnung, Senden des serverlosen Anforderungstokens an eine Host-Schnittstelle (312) zur Steuerung serverloser Rechenressourcen.

2. Verfahren nach einem der vorhergehenden Ansprüche, wobei:
das Iterationsabbruchkriterium eine Bedingung umfasst, dass die aktuelle Rechenressourcen-Puffergröße ein Ende des Rechenressourcen-Pufferbereichs erreicht hat.

3. Verfahren nach einem der vorhergehenden Ansprüche, wobei:
das Iterationsabbruchkriterium eine Bedingung umfasst, dass der Rechenleistungsbewertungswert für die aktuelle Rechenressourcen-Puffergröße ein Extremum erreicht hat.

4. Verfahren nach Anspruch 3, wobei das Extremum mit einem Verbrauchsmetrikminimum für einen oder mehrere Rechenleistungsbewertungswerte für das iterative Durchlaufen verknüpft ist.

5. Verfahren nach einem der vorhergehenden Ansprüche, wobei:
die Rechenressourcennutzungsdaten Speichernutzungsdaten umfassen;
die Basis-Rechenressourcengröße eine Basisspeicherzuweisung umfasst; und
der Rechenressourcen-Pufferbereich einen Speicherpufferbereich umfasst.

6. Verfahren nach einem der vorhergehenden Ansprüche, wobei:
die Rechenressourcen-Zuweisungsschicht ein neuronales Netz umfasst, das unter Verwendung der historischen Daten trainiert wurde; und
das Verfahren umfasst, dass die Schaltungsanordnung zur serverlosen Dimensionierung die rechenressourcenbezogene Deep-Learning-Analyse der Rechenressourcennutzungsdaten durchführt, indem sie die serverlose Funktion mit früheren Funktionen vergleicht, indem sie eine Repräsentation der serverlosen Funktion auf eine Eingabeschicht des neuronalen Netzes anwendet.

7. Verfahren nach einem der vorhergehenden Ansprüche, wobei das Verfahren umfasst, dass die Schaltungsanordnung zur serverlosen Dimensionierung den Rechenressourcen-Pufferbereich durch Folgendes bestimmt:
Bestimmen einer maximalen vorhergesagten Rechenressourcengröße, die von der serverlosen Funktion verwendet wird; und
Festlegen eines untersten Endes des Rechenressourcen-Pufferbereichs derart, dass das unterste Ende und die Basis-Rechenressourcengröße zusammen gleich der maximalen vorhergesagten Rechenressourcengröße sind.

8. Verfahren nach einem der vorhergehenden Ansprüche, wobei das Verfahren umfasst, dass die Schaltungsanordnung zur serverlosen Dimensionierung die Basis-Rechenressourcengröße durch Folgendes bestimmt:
Vorhersagen von Rechenressourcengrößen-Nutzungen im Verlauf der Ausführung der serverlosen Funktion; und
Bestimmen einer Perzentil-Rechenressourcengrößen-Nutzung, die einer Rechenressourcengrößen-Nutzung bei einem vorbestimmten Perzentil unter den Rechenressourcengrößen-Nutzungen entspricht; und
Festlegen der Basis-Rechenressourcengröße, um die Perzentil-Rechenressourcengrößen-Nutzung abzudecken.

9. Verfahren nach einem der vorhergehenden Ansprüche, wobei die historischen Daten Nutzungsdaten aus mindestens 12 Monaten entsprechen.

10. Verfahren nach einem der vorhergehenden Ansprüche, wobei das serverlose Anforderungstoken auf Grundlage einer Finalisierungsanweisung erzeugt wird, wobei die Finalisierungsanweisung umfasst:
einen Bedienereingabebefehl, der an einer serverlosen Befehlsschnittstelle empfangen wird, die in einer Präsentationsschicht des Stapels zur serverlosen Dimensionierung erzeugt wird;
eine durch Rückmeldungen trainierte Anpassung durch maschinelles Lernen, die auf Grundlage einer Historie von Bedienereingabebefehlen bestimmt wird; oder
beides.

11. System, das dazu eingerichtet ist, das Verfahren nach einem der Ansprüche 1 bis 10 durchzuführen.

12. Computerprogramm, das, wenn es durch einen oder mehrere Prozessoren ausgeführt wird, den einen oder die mehreren Prozessoren dazu veranlasst, das Verfahren nach einem der Ansprüche 1 bis 10 durchzuführen.

## Revendications

1. Procédé comprenant : au niveau d'une circuiterie de dimensionnement sans serveur (314) configurée pour exécuter une pile de dimensionnement sans serveur (100) :
au niveau d'une couche de préparation de données (105) de la pile de dimensionnement sans serveur :
l'obtention de données historiques (112) comprenant des données de durée d'exécution et des données d'utilisation de ressources de calcul pour une fonction sans serveur ;
au niveau d'une couche d'éligibilité (110) de la pile de dimensionnement sans serveur :
l'accès aux données historiques au moyen d'opérations de stockage de données fournies par la couche de préparation de données ;
la détermination, sur la base des données historiques, de la complétude des données pour une fonction sans serveur représentée au sein des données historiques ; et
lorsque la complétude des données pour la fonction sans serveur dépasse un seuil prédéterminé, le marquage de la fonction sans serveur comme éligible au dimensionnement ;
au niveau d'une couche de sélection de métriques (120) de la pile de dimensionnement sans serveur, la sélection d'une métrique de durée d'exécution et d'une métrique de dimensionnement de ressources de calcul pour une comparaison itérative ;
au niveau d'une couche d'allocation de ressources de calcul (150) de la pile de dimensionnement sans serveur, la détermination, au moyen d'une analyse par apprentissage profond relative aux ressources de calcul portant sur les données d'utilisation de ressources de calcul, d'une taille de base de ressources de calcul (152) et d'une plage de tampon de ressources de calcul (154) ;
au niveau d'une couche de mise en correspondance de durées (160) de la pile de dimensionnement sans serveur, la réalisation d'un parcours itératif de la plage de tampon de ressources de calcul par les opérations suivantes : pour chaque itération :
la sélection d'une taille actuelle de tampon de ressources de calcul pour l'itération, la taille actuelle de tampon de ressources de calcul se situant dans la plage de tampon de ressources de calcul ;
la détermination d'une durée actuelle de calcul pour la fonction sans serveur sur la base d'une combinaison de la taille de base de ressources de calcul et de la taille actuelle de tampon de ressources de calcul et en utilisant une analyse par apprentissage profond relative à la durée portant sur les données de durée d'exécution ;
la détermination, sur la base de la durée actuelle de calcul, de la taille de base de ressources de calcul et de la taille actuelle de tampon de ressources de calcul, d'un score actuel de performance de calcul pour la taille actuelle de tampon de ressources de calcul, dans lequel la détermination du score de performance de calcul comprend :
la génération d'un score sur la base d'un produit obtenu en multipliant une somme de la taille de base de ressources de calcul et de la taille actuelle de tampon de ressources de calcul par la durée actuelle de calcul ;
l'accès à des données de métrique de consommation pour la somme de la taille de base de ressources de calcul et de la taille actuelle de tampon de ressources de calcul ; et
la génération du score de performance de calcul en pondérant la somme sur la base des données de métrique de consommation pour la somme de la taille de base de ressources de calcul et de la taille actuelle de tampon de ressources de calcul,
dans lequel le score actuel de performance de calcul comprend un score de type efficacité, dans lequel le score de type efficacité est attribué en favorisant une durée d'exécution plus courte et moins de ressources de calcul ;
la détermination du fait que le score actuel de performance de calcul satisfait ou non à un critère d'arrêt d'itération ; et
lorsque le score actuel de performance de calcul satisfait au critère d'arrêt d'itération :
la cessation du parcours itératif ; et
la désignation de la taille actuelle de tampon de ressources de calcul comme une taille prescriptive de tampon de ressources de calcul ; et
au niveau d'une couche de réquisition (170) de la pile de dimensionnement sans serveur, la génération d'un jeton de réquisition sans serveur (172) comprenant :
une requête pour la fonction sans serveur avec une taille demandée correspondant à la taille prescriptive de tampon de ressources de calcul et à la taille de base de tampon de ressources de calcul ; et
au moyen d'une circuiterie d'interface réseau, l'envoi du jeton de réquisition sans serveur à une interface hôte (312) pour la commande de ressources de calcul sans serveur.

2. Procédé selon l'une quelconque des revendications précédentes, dans lequel :
le critère d'arrêt d'itération comprend une condition selon laquelle la taille actuelle de tampon de ressources de calcul a atteint une extrémité de la plage de tampon de ressources de calcul.

3. Procédé selon l'une quelconque des revendications précédentes, dans lequel :
le critère d'arrêt d'itération comprend une condition selon laquelle le score de performance de calcul pour la taille actuelle de tampon de ressources de calcul a atteint un extremum.

4. Procédé selon la revendication 3, dans lequel l'extremum est associé à un minimum de métrique de consommation pour un ou plusieurs scores de performance de calcul pour le parcours itératif.

5. Procédé selon l'une quelconque des revendications précédentes, dans lequel :
les données d'utilisation de ressources de calcul comprennent des données d'utilisation de mémoire ;
la taille de base de ressources de calcul comprend une allocation de mémoire de base ; et
la plage de tampon de ressources de calcul comprend une plage de tampon de mémoire.

6. Procédé selon l'une quelconque des revendications précédentes, dans lequel :
la couche d'allocation de ressources de calcul comprend un réseau neuronal entraîné à l'aide des données historiques ; et
le procédé comprend la réalisation, par la circuiterie de dimensionnement sans serveur, de l'analyse par apprentissage profond relative aux ressources de calcul portant sur les données d'utilisation de ressources de calcul, en comparant la fonction sans serveur à des fonctions précédentes par application d'une représentation de la fonction sans serveur à une couche d'entrée du réseau neuronal.

7. Procédé selon l'une quelconque des revendications précédentes, dans lequel le procédé comprend la détermination, par la circuiterie de dimensionnement sans serveur, de la plage de tampon de ressources de calcul par :
la détermination d'une taille maximale prédite de ressources de calcul utilisée par la fonction sans serveur ; et
la fixation d'une extrémité inférieure de la plage de tampon de ressources de calcul de telle sorte que l'extrémité inférieure et la taille de base de ressources de calcul soient ensemble égales à la taille maximale prédite de ressources de calcul.

8. Procédé selon l'une quelconque des revendications précédentes, dans lequel le procédé comprend la détermination, par la circuiterie de dimensionnement sans serveur, de la taille de base de ressources de calcul par :
la prédiction d'utilisations de tailles de ressources de calcul au cours de l'exécution de la fonction sans serveur ; et
la détermination d'une utilisation de taille de ressources de calcul au percentile, correspondant à une utilisation de taille de ressources de calcul à un percentile prédéterminé parmi les utilisations de tailles de ressources de calcul ; et
la fixation de la taille de base de ressources de calcul de manière à prendre en charge l'utilisation de taille de ressources de calcul au percentile.

9. Procédé selon l'une quelconque des revendications précédentes, dans lequel les données historiques correspondent à au moins 12 mois de données d'utilisation.

10. Procédé selon l'une quelconque des revendications précédentes, dans lequel le jeton de réquisition sans serveur est généré sur la base d'une directive de finalisation, la directive de finalisation comprenant :
une commande d'entrée d'opérateur reçue au niveau d'une interface de commande sans serveur générée au niveau d'une couche de présentation de la pile de dimensionnement sans serveur ;
un ajustement par apprentissage automatique entraîné par rétroaction, déterminé sur la base d'un historique de commandes d'entrée d'opérateur ; ou
les deux.

11. Système agencé pour mettre en œuvre le procédé selon l'une quelconque des revendications 1 à 10.

12. Programme informatique qui, lorsqu'il est exécuté par un ou plusieurs processeurs, amène le ou les processeurs à mettre en œuvre le procédé selon l'une quelconque des revendications 1 à 10.
